# EUROPÄISCHE PATENTANMELDUNG

(11) **EP 4 756 298 A1**
(43) Veröffentlichungstag der Anmeldung: **10.06.2026**
(21) Anmeldenummer: 25220633.9
(22) Anmeldetag: 04.12.2025
(51) Int. Cl.: F24D 19/08, B01D 19/00, F16K 24/04, F24H 15/12

(54) **GASABSCHEIDEVORRICHTUNG**

(30) Priorität: 06.12.2024 DE 102024136542; 23.04.2025 DE 102025115544
(71) Anmelder: Vaillant GmbH, 42859 Remscheid NRW (DE)
(72) Erfinder: Klaes, Jannis, 53506 Ahrbrück (DE)
(74) Vertreter: Popp, Carsten

(57) **Zusammenfassung**

Mehrteilige Vorrichtung mit einem Vorabscheider (1) zum Abscheiden von Gas aus einem Wärmeträgerkreislauf, wobei der Vorabscheider (1) gebildet wird durch ein waagerechtes Rohrstück (3) mit einem in der Einbaulage aufwärts gerichteten vertikalen Rohrstück (4) mit einer Kammer (5) und mit einem darüber angeschlossenen Entlüfter (6), innerhalb des vertikalen Rohrstücks (4) eine Schwimmerkugel (7) beweglich gelagert ist, die innerhalb des waagerechten Rohrstücks (3) ebenfalls beweglich gelagert ist, und innerhalb des waagerechten Rohrstücks (3) in der vorgesehenen Strömungsrichtung ein für die Schwimmerkugel (7) dichtend wirkender Anschlag (10) vorgesehen ist, und die Schwimmerkugel (7) ein geringeres spezifisches Gewicht als das des Wärmeträgermediums (17) hat, welches für den Wärmeträgerkreislauf vorgesehen ist, aber ein höheres spezifisches Gewicht hat als das gasförmige Kältemittel (18) unter den regulären Betriebsbedingungen des Wärmeträgermediums (17), und am oberen Ende des vertikalen Rohrstücks (4) ein Entlüfter (6) angeordnet ist, zwischen dem vertikalen Rohrstück (4) und dem Entlüfter (6) eine Dichtung (8) vorgesehen ist, die auf den Durchmesser der Schwimmerkugel (7) abgestimmt ist und den Übergang vom vertikalen Rohrstück (4) dichtend abschließt, wenn die Schwimmerkugel (7) gegen die Dichtung (8) gedrückt wird.

## Beschreibung

Die Erfindung betrifft eine Kombination aus Gasabscheidern und Absperrventil als Sicherheitssystem für eine Zweiphasenströmung in einem Heizungssystem, welches durch eine Wärmepumpe mit einem entzündlichen Kältemittel betrieben wird. Im Allgemeinen befinden sich in einem solchen System mindestens drei Kreisläufe, einer davon ist ein Kältemittelkreislauf, die beiden anderen sind der Heizungskreislauf und der Wärmequellenkreislauf. In modernen Systemen kann es auch eine Umschaltung von einem Heizungsbetrieb in einen Klimatisierungsbetrieb und außerdem eine Warmwasserbereitung vorgesehen werden.

Die verschiedenen Kreisläufe treffen sich in den benötigten indirekten Wärmeübertragern, normalerweise besteht zwischen den Kreisläufen keine hydraulische Verbindung. Durch häufige Temperatur- und Druckwechsel sind die indirekten Wärmeübertrager großen Spannungen ausgesetzt, was zu Leckagen in diesen Wärmeübertragern führen kann. In den Fällen, wo dann im Kältekreis ein höherer Druck als im Heizungskreis anliegt, tritt Kältemittel in den Heizungskreis ein.

Das würde ohne weitere Sicherheitsmaßnahmen zu einer Druckerhöhung im Heizungskreislauf führen und nachfolgend zum Ansprechen von Sicherheitsventilen und Gasabscheidern und damit zum Austritt von Kältemittel in die Umgebung. Dabei kann eine entzündliche Atmosphäre entstehen. Daneben entstünde das Problem, dass das Kältemittel nicht aus dem Kreislauf entfernt werden kann, sondern nur Flüssigkeit durch das Sicherheitsventil abgelassen wird und die Entfernungsrate des Entlüfters des Gasabscheiders nicht ausreicht. Das würde dazu führen, dass das Gas ins Gebäude gelangt und sich im Gebäude ansammelt. Dabei könnte sich ein zündfähiges Gemisch bilden.

Bei solchen Leckagen ist vorab aber nicht bekannt, wie groß sie sind und welche Mengen an Kältemittel in den Heizungskreis eintreten können. Die meisten Leckagen sind sehr klein, ihre Ursache sind Haarrisse und das übertretende Kältemittel dringt in Form feinperliger Gasbläschen in das Wärmeträgermedium des Heizkreises ein, in der Regel Wasser oder Sole, ein. Solche Gasbläschen können mit bekannten Mitteln gefahrlos aus dem Heizkreis abgeschieden werden, Beispiele werden in den Schriften DE 33 27 846 A1, DE 10 2006 015 263 A1, DE 10 2009 048 402 A1, DE 10 2010 024 107 A1 und DE 10 2006 021 454 A1 aufgezeigt. Bei den bekannten Mitteln handelt es sich um herkömmliche Gasabscheider bzw. Entlüfter oder automatische Entlüfter, die mit sicherheitstechnischen Zusätzen ausgerüstet sein können.

Das zugrundeliegende Problem wird in der DE 10 2020 103 743 A1 durch zwei Maßnahmen gelöst: Einerseits bewirkt ein Rückschlagventil, dass das Wärmepumpenkreislaufmedium nicht entgegen der Betriebsströmungsrichtung des Heizkreislaufmediums zur Umwälzpumpe gelangen kann, wobei die Umwälzpumpe stromaufwärts des Wärmeübertragers angeordnet sein muss, andererseits gewährleistet eine Entgasungseinrichtung, dass sich das durchgetretene Wärmepumpenkreislaufmedium auch nicht in Betriebsströmungsrichtung des Heizkreislaufmediums ausbreiten kann.

Bei sehr seltenen größeren Leckagen, also Abrissen in Kondensatorwärmeübertragern, können solche bekannten Gasabscheider bzw. Entgasungseinrichtungen nicht erfolgreich eingesetzt werden und es muss verhindert werden, dass sich größere Gasblasen bilden oder ganze Rohrabschnitte mit gasförmigem Kältemittel füllen könnten. Falls solche gasförmigen Abschnitte in eine nachfolgende Umwälzpumpe gelangen, findet keine weitere Förderung statt. Darüber hinaus könnte brennbares Kältemittel über die Pumpe ins Gebäude gelangen.

Aufgabe der Erfindung ist daher, ein Abscheidesystem und eine Abscheidemethode für ein Wärmepumpensystem bereitzustellen, mit der sowohl kleine gasförmige Leckagen als auch große Leckagen, bei denen gasförmiges Kältemittel in das Wärmeträgermedium entweicht, sicher voneinander trennen zu können, ohne dass bei entzündlichen Kältemitteln eine entzündlichen Atmosphäre auftreten kann.

Die Erfindung löst die Aufgabe mittels einer Vorrichtung aufweisend einen Vorabscheider zum Abscheiden von Gas aus einem Wärmeträgerkreislauf, der Vorabscheider aufweisend einen Wärmeträger-Einlauf und einen Wärmeträger-Auslauf, wobei
- der Vorabscheider gebildet wird durch ein waagerechtes Rohrstück mit einem in der Einbaulage aufwärts gerichteten vertikalen Rohrstück mit einer Kammer und mit einem darüber angeschlossenen Entlüfter,
- innerhalb des vertikalen Rohrstücks eine Schwimmerkugel beweglich gelagert ist, die innerhalb des waagerechten Rohrstücks ebenfalls beweglich gelagert ist,
- wobei innerhalb des waagerechten Rohrstücks in der vorgesehenen Strömungsrichtung ein für die Schwimmerkugel dichtend wirkender Anschlag vorgesehen ist,
- wobei die Schwimmerkugel ein geringeres spezifisches Gewicht als das des Wärmeträgermediums hat, welches für den Wärmeträgerkreislauf vorgesehen ist, aber ein höheres spezifisches Gewicht hat als das gasförmige Kältemittel unter den regulären Betriebsbedingungen des Wärmeträgermediums,
- am oberen Ende des vertikalen Rohrstücks ein Entlüfter angeordnet ist.

Zwischen dem vertikalen Rohrstück und dem Entlüfter kann eine Dichtung vorgesehen werden, die auf den Durchmesser der Schwimmerkugel abgestimmt ist und den Übergang vom vertikalen Rohrstück dichtend abschließt, wenn die Schwimmerkugel gegen die Dichtung gedrückt wird. Wenn der Entlüfter ein automatischer Entlüfter mit einer Sperre gegen Flüssigkeitsdurchtritt ist, kann auf eine solche Dichtung verzichtet werden.

Eine weitere wichtige Funktion neben der reinen Gasabscheidung im Falle großer einströmender Gasmengen ist die Absperrung des Zulaufs für den Nachabscheider, also die Sperrwirkung.

Mit "vertikal" ist dabei nicht notwendig eine exakt senkrechte Ausrichtung gemeint, sondern es können auch leicht winklige Abzweige sein, wie sie in der Installationstechnik üblich sind, in denen die Schwimmerkugel beweglich geführt wird. Außerdem muss der Durchmesser des vertikalen Rohrstücks größer sein als die Schwimmerkugel, damit Gas an der Schwimmerkugel vorbeiströmen kann. Daher kann die Kammer auch aus einer Aufweitung des Rohrstücks gebildet sein.

Sofern es von betrieblichem Interesse ist, kann die Schwimmerkugel aus magnetischem Material gefertigt sein und entlang der beweglichen Lagerung können Messaufnehmer vorgesehen werden, mit denen die Position der Schwimmerkugel verfolgt werden kann. Mit solchen magnetischen Methoden kann auch eine Rückholung der Schwimmerkugel bei der Demontage der Abscheidevorrichtung im Störungsfall durchgeführt werden.

In einer Ausgestaltung ist der Vorabscheider Teil einer mehrteiligen Abscheidevorrichtung. Hierbei ist vorgesehen, dass
- in der vorgesehenen Strömungsrichtung vor dem Wärmeträger-Einlauf des Vorabscheiders ein Sicherheitsventil angeordnet ist.
- dass in der vorgesehenen Strömungsrichtung nach dem Wärmeträger-Auslauf des Vorabscheiders ein Nachabscheider angeordnet ist.

In einer weiteren Ausgestaltung ist vorgesehen, dass der Nachabscheider ein aufrecht stehender Zentrifugalabscheider mit einem waagerecht an den Wärmeträgerauslauf des Vorabscheiders anschließenden tangentialen Einlauf ist und der Nachabscheider oben ein automatisches Entlüftungsventil aufweist. In einer solchen Konstellation dient der Vorabscheider zur Abscheidung von großen, gleichzeitig anfallenden Gasmengen und der Nachabscheider der Abscheidung von kleinen Gasmengen, die feinperlig vorliegen können, während das Sicherheitsventil dafür sorgt, dass die nötigen Druckverhältnisse eingehalten werden.

In einer weiteren Ausgestaltung ist vorgesehen, dass der Entlüfter vom Vorabscheider und der Entlüfter vom Nachabscheider und der Auslass des Sicherheitsventils an ein Gasableitungssystem angeschlossen sind. Dieses entlüftet in den Außenbereich oder in einen Aktivkohleadsorber.

Die Abscheidevorrichtung ist nicht nur zur Abscheidung von entzündlichem Kältemittel geeignet, sondern auch bei der Erstbefüllung des Heizungskreislaufs nützlich, da schnell große Mengen an Luft im Rohrsystem entfernt werden können.

Vorabscheider und Nachabscheider ergänzen sich. Wichtig ist dabei, dass die Komponenten oberhalb des Wärmeübertragers platziert und dass sowohl der Vorabscheider als auch das Sicherheitsventil auf gleicher Höhe oder höher als der Einlass des Nachabscheiders platziert sind. Dazu ist es notwendig, dass der Vorabscheider und das Sicherheitsventil nahe am Nachabscheider und nahe zueinander platziert sind. Die Reihenfolge darf dabei nicht geändert werden.

In einer weiteren Ausgestaltung ist vorgesehen, das Sicherheitsventil im Bauteil des Vorabscheiders zu integrieren.

Die Erfindung wird nachfolgend anhand von Skizzen näher erläutert. Dabei zeigen:
- Fig. 1: einen Vorabscheider,
- Fig. 2: eine Abscheidevorrichtung aus Sicherheitsventil, Vorabscheider und Hauptabscheider,
- Fig. 3a bis 3d: die Funktionsweise der Abscheidevorrichtung.

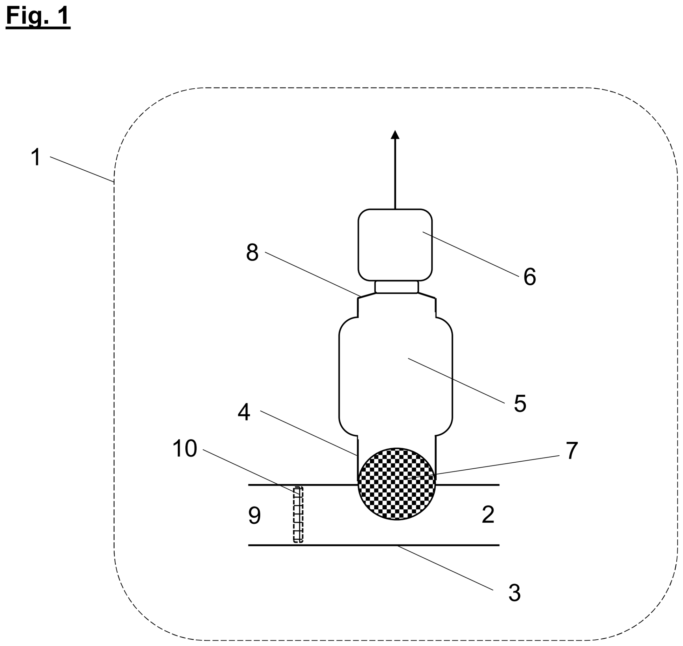

Fig. 1 zeigt schematisch den Vorabscheider 1 mit seinen Anschlüssen. Hierbei strömt das Wärmeträgermedium von rechts nach links und tritt im Vorabscheider-Einlauf 2 ein. Der Vorabscheider 1 umfasst ein waagerechtes Rohrstück 3, von dem ein vertikales Rohrstück 4 nach oben hin abzweigt. In diesem vertikalen Rohrstück 4 befindet sich eine Kammer 5, in welcher sich abzuscheidendes Gas sammeln kann. Am oberen Ende der Kammer 5 ist ein Entlüfter 6 vorgesehen. Im vertikalen Rohrstück 4 schwimmt eine Schwimmerkugel 7.

Die Schwimmerkugel ist leichter, als das Wärmeträgermedium, aber schwerer als das gasförmige Kältemittel. Sie hat den gleichen Durchmesser wie das vertikale Rohrstück 4 und das waagerechte Rohrstück 3 im Bereich des Abzweigs, wobei die Kammer 5 im vertikalen Rohrstück 4 einen größeren Durchmesser haben kann. Falls also gasförmiges Kältemittel in das vertikale Rohrstück 4 eintreten sollte, sinkt die Schwimmerkugel 7 bis zur sich einstellenden Oberfläche des Wärmeträgermediums ab.

Im Normalfall befindet sich kein oder kaum Gas im Wärmeträgermedium. Dann steigt die Schwimmerkugel 7 bis zum oberen Ende der Kammer 5, bis sie an der Dichtung 8 anliegt und den Übertritt von Fluid zum automatischen Entlüfter 6 versperrt. Falls Gas aus dem Wärmeträgermedium in das vertikale Rohrstück 4 und nachfolgend in die Kammer 5 gelangt, sinkt die Schwimmerkugel 7 immer weiter ab.

Das Absinken findet aber nur statt, wenn es größere Gasblasen oder sogenannte Gassäcke, es also ganze gasgefüllte Abschnitte in der Zuleitung gibt, kleine mitgeführte Gasbläschen führen nicht zum Absinken. Solche größeren Gasblasen oder Gassäcke sind sowohl für Umwälzpumpen als auch für Zentrifugalabscheider äußerst problematisch. Bei Umwälzpumpen ist zuerst mit Kavitation zu rechnen, welche zur Zerstörung oder erhöhtem Verschleiß führt, und danach mit einem Verlust der Förderleistung, da keine Flüssigkeit mehr in die Umwälzpumpe gelangt. Bei Zentrifugalabscheidern, wie sie für die Abscheidung fein verteilter Gasblasen zum Einsatz kommen, führten solche Gasblasen oder Gassäcke dazu, dass an deren Eintritt statt Flüssigkeit Gas einströmt und die Zentrifugalabscheidung nicht mehr stattfinden kann.

Der Vorabscheider hat die Aufgabe, das zu verhindern. Dazu dient die Schwimmerkugel 7, die bei Anwesenheit von Gas im vertikalen Rohrstück 4 immer weiter absinkt, bis der Flüssigkeitsspiegel im waagerechten Rohrstück 3 erreicht ist. Die Schwimmerkugel 7 lässt dann auf ihrer Unterseite Flüssigkeit und auf ihrer Oberseite Gas durch, wobei das Gas in das vertikale Rohrstück 4 und die Wärmeträgerflüssigkeit weiter im waagerechten Rohrstück 4 in Richtung des Vorabscheider-Auslasses 9 strömen kann.

Falls die Schwimmerkugel 7 auf ihrer Unterseite auf dem waagerechten Rohrstück 3 aufzuliegen kommt, kann kein Wärmeträgermedium an der Schwimmerkugel 7 vorbeiströmen und die Schwimmerkugel 7 wird ein Stück weit in Richtung des Vorabscheider-Auslasses 9 geschoben. Die Schwimmerkugel 7 stößt dann an den dichtenden Absatz 10 an. Dieser dichtende Absatz 10 verhindert, dass die Schwimmerkugel 7 zu weit in das waagerechte Rohrstück 3 hineinrutschen kann und dann nicht wieder in den vertikalen Rohrabschnitt 4 zurückrutschen kann. Andererseits verhindert sie die weitere Strömung des Wärmeträgermediums und wirkt dann als Rückschlagventil.

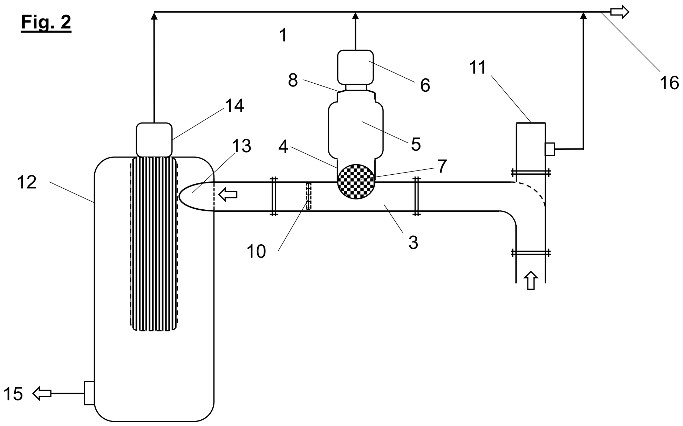

Fig. 2 zeigt eine Vorrichtung bestehend aus einem Sicherheitsventil 11, dem Vorabscheider 1, dem Nachabscheider 12 mit dem tangentialen Einlauf 13, dem unteren Abzug für Wärmeträgermedium 14, dem Entlüfter 15 und dem Gasableitungssystem 16. Das Wärmeträgermedium wird dabei zuerst in das Sicherheitsventil 11 geführt, um Überdruck aufgrund von Leckagen zu verhindern. Typischerweise wird das Wärmeträgermedium durch eine Umwälzpumpe und ein Rückschlagventil in den Kondensatorwärmeübertrager einer Wärmepumpe gefördert, in welchem dessen Kältemittelseite unter hohem Druck steht. Je nach Umfang der möglichen Leckage kann das Wärmeträgermedium dann über den Druckausgleich im System ebenfalls unter Druck geraten, eine Rückwärtsströmung in die Umwälzpumpe wird dabei über das Rückschlagventil verhindert. Der entstehende Überdruck kann dann nur in das Wärmeträgermedium zum Ausgang des Kondensatorwärmeübertragers ausweichen. Diesen Überdruck baut das Sicherheitsventil 11 ab.

Das Wärmeträgermedium gelangt danach in den Vorabscheider 1, wo eine Trennung von eventuell mit feinen Kältemittelbläschen angereichertes Wärmeträgermedium und zusammenhängenden großen Kältemittelblasen und Kältemittel-Gassäcken vorgenommen wird. Im Anschluss daran erfolgt die Feinabscheidung im Nachabscheider 12, er über einen tangentialen Einlauf 13 verfügt und die gasförmigen Bestandteile abscheidet. Die Gasbestandteile werden über den Entlüfter 14 aus dem Nachabscheider 12 entfernt und das gasblasenfreie Wärmeträgermedium wird im unteren Bereich des Nachabscheiders 12 im Nachabscheider-Ablauf abgezogen.

Da aus allen drei Abscheidegeräten mit Kältemittelgas kontaminierte Luft abgezogen wird und diese nicht am Aufstellungsort freigesetzt werden soll, werden die Entlüfter 6 und 14 und der Ablass des Sicherheitsventils 11 im Gasableitungssystem 16 zusammengefasst und an einen für die Freisetzung ungefährlichen Ort fortgeleitet.

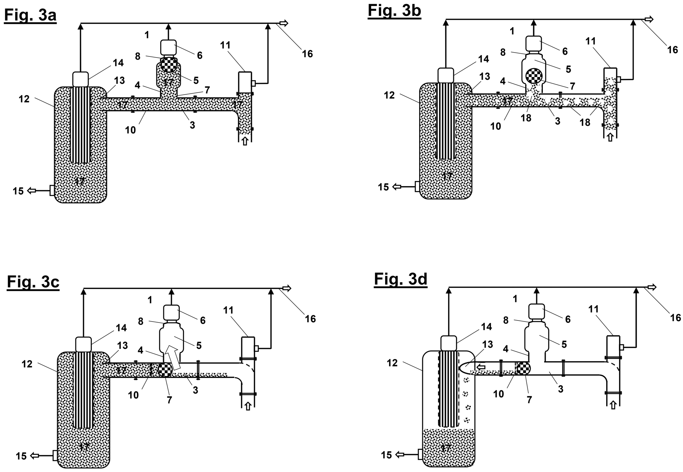

Fig. 3a bis Fig 3d zeigen die Funktionsweise des Systems, wie es in Fig. 1 und Fig. 2 gezeigt wird, mit eingezeichnetem Wärmeträgermedium 17 und Gasblasen 18 verschiedener Größe.

Fig. 3a zeigt die Füllung im Normalfall, bei dem höchstens einige wenige Luftblasen im Wärmeträgermedium 17 sind. Das waagerechte Rohrstück 3, das vertikale Rohrstück 4 und der Nachabscheider 12 sind vollständig gefüllt, die Schwimmerkugel 7 in der Kammer 5 liegt an der Dichtung 8 an. Weder das Sicherheitsventil 11 noch der Entlüfter 6 geben gasförmige Bestandteile ab, aus dem Nachabscheider 12 werden durch den Entlüfter 14 kleine Mengen an Luft abgeführt.

Fig. 3b zeigt den Fall einer großen Leckage. Zunächst wird das Gas im Nachabscheider 12 abgeschieden. Wenn die Abscheidekapazität nicht ausreicht, wird zusätzlich Gas im Vorabscheider 1 abgeschieden. Wenn das auch nicht reicht, versperrt die Schwimmerkugel 7 den Weg zum Nachabscheider 12, es baut sich Druck auf und dann öffnet das Sicherheitsventil 11, bei dem letztendlich Überdruck abgebaut wird.

Fig. 3b zeigt dabei, wie sich im waagerechten Rohrstück 3 ein Gemisch aus Wärmeträgermedium 17 und gasförmigem, großblasigem Kältemittel 18 eingestellt hat. Hierbei strömt das gasförmige Kältemittel 18 an der Oberseite des Rohrstücks und tritt in das vertikale Rohrstück 4 ein, in welchem die Schwimmerkugel 7 in der Kammer 5 absinkt und sich das gasförmige Kältemittel 18 im oberen Teil der Kammer 5 sammelt und vom Entlüfter 6 sukzessive an das Gasableitungssystem 16 abgeführt wird. Da fast das komplette Kältemittelgas 18 in das vertikale Rohrstück 4 einfließt, ist der Abschnitt des waagerechten Rohrstücks 3, der zum Nachabscheider 12 führt, wie auch der Nachabscheider 12 selbst, mit Wärmeträgermedium 17 gefüllt, der Nachabscheider 12 bleibt weiterhin in Betrieb und scheidet restliches Gas ab und gibt es durch den Entlüfter 14 in das Gasableitungssystem 16 ab.

Fig. 3c zeigt den Fall, dass eine große Menge gasförmigen Kältemittels das Wärmeträgermedium 17 fast vollständig verdrängt hat, nachdem es in das vertikale Rohrstück 4 eingetreten ist und die Schwimmerkugel 7 komplett bis auf den Boden des vertikalen Rohrstücks 4 abgesunken ist. In diesem Fall tritt nur noch sehr wenig Wärmeträgermedium 17 in den Nachabscheider 12 ein, der kaum noch Abscheideleistung erbringen kann.

Fig. 3d zeigt den Fall, dass kein Wärmeträgermedium mehr in den Vorabscheider 1 einströmt, sondern nur noch gasförmiges Kältemittel 18. Die Schwimmerkugel 7 wird dann gegen den dichtenden Absatz 10 geschoben und sperrt den Weg zum Nachabscheider ab. Das gesamte gasförmige Kältemittel wird dann vom Entlüfter 6 an das Gasableitungssystem abgegeben. In Abhängigkeit des Drucks, der sich dabei aufgebaut hat, öffnet auch das Sicherheitsventil, in der Regel oberhalb von 2,5 bar.

Der Teil, der das waagerechte Rohrstück 3 mit dem Nachabscheider 12 verbindet, läuft dann kurzfristig trocken und das Wärmeträgermedium aus dem Nachabscheider 12 wird abgezogen, bis der Nachabscheider 12 leer ist. Sofern wie üblich ein Membranausgleichsbehälter im System vorhanden ist, findet danach ein Ausgleich statt und es läuft Wärmeträgermedium 17 nach. Dieses Wärmeträgermedium 17 füllt dann den Vorabscheider 1 und den Nachabscheider 11, während die Schwimmerkugel 7 wieder im vertikalen Rohrstück 4 aufsteigt.

### Bezugszeichenliste

- 1: Vorabscheider
- 2: Vorabscheider-Einlauf
- 3: Waagerechtes Rohrstück
- 4: Vertikales Rohrstück
- 5: Kammer
- 6: Entlüfter
- 7: Schwimmerkugel
- 8: Dichtung
- 9: Vorabscheider-Auslass
- 10: dichtender Absatz
- 11: Sicherheitsventil
- 12: Nachabscheider
- 13: tangentialer Einlauf
- 14: Entlüfter
- 15: Nachabscheider-Ablauf
- 16: Gasableitungssystem
- 17: Wärmeträgermedium
- 18: gasförmiges Kältemittel

## Patentansprüche

1. Vorabscheider (1) zum Abscheiden von Gas aus einem Wärmeträgerkreislauf, der Vorabscheider aufweisend einen Wärmeträger-Einlauf und einen Wärmeträger-Auslauf, **dadurch gekennzeichnet, dass**
- der Vorabscheider (1) gebildet wird durch ein waagerechtes Rohrstück (3) mit einem in der Einbaulage aufwärts gerichteten vertikalen Rohrstück (4) mit einer Kammer (5) und mit einem darüber angeschlossenen Entlüfter (6),
- innerhalb des vertikalen Rohrstücks (4) eine Schwimmerkugel (7) beweglich gelagert ist, die innerhalb des waagerechten Rohrstücks (3) ebenfalls beweglich gelagert ist,
- wobei innerhalb des waagerechten Rohrstücks (3) in der vorgesehenen Strömungsrichtung ein für die Schwimmerkugel (7) dichtend wirkender Anschlag (10) vorgesehen ist,
- wobei die Schwimmerkugel (7) ein geringeres spezifisches Gewicht als das des Wärmeträgermediums (17) hat, welches für den Wärmeträgerkreislauf vorgesehen ist, aber ein höheres spezifisches Gewicht hat als das gasförmige Kältemittel (18) unter den regulären Betriebsbedingungen des Wärmeträgermediums (17),
- am oberen Ende des vertikalen Rohrstücks (4) ein Entlüfter (6) angeordnet ist.

2. Vorrichtung nach Anspruch 1, **dadurch gekennzeichnet, dass** zwischen dem vertikalen Rohrstück (4) und dem Entlüfter (6) eine Dichtung (8) vorgesehen ist, die auf den Durchmesser der Schwimmerkugel (7) abgestimmt ist und den Übergang vom vertikalen Rohrstück (4) dichtend abschließt, wenn die Schwimmerkugel (7) gegen die Dichtung (8) gedrückt wird.

3. Mehrteilige Vorrichtung mit einem Vorabscheider (1) nach Anspruch 1, **dadurch gekennzeichnet, dass** in der vorgesehenen Strömungsrichtung vor dem Wärmeträger-Einlauf des Vorabscheiders 1 ein Sicherheitsventil (11) angeordnet ist.

4. Vorrichtung nach einem der Ansprüche 1 bis 3, **dadurch gekennzeichnet, dass** in der vorgesehenen Strömungsrichtung nach dem Wärmeträger-Auslauf des Vorabscheiders (1) ein Nachabscheider (12) angeordnet ist.

5. Vorrichtung nach Anspruch 4, **dadurch gekennzeichnet, dass** der Nachabscheider (12) ein aufrecht stehender Zentrifugalabscheider mit einem waagerecht an den Wärmeträgerauslauf des Vorabscheiders (1) anschließenden tangentialen Einlauf (13) ist und der Nachabscheider (12) oben ein automatisches Entlüftungsventil (14) aufweist.

6. Vorrichtung nach einem der Ansprüche 1 bis 5, **dadurch gekennzeichnet, dass** der Entlüfter (6) von Vorabscheider (1) und der Entlüfter von Nachabscheider (12) und der Auslass des Sicherheitsventils (11) an ein Gasableitungssystem (16) angeschlossen sind.

7. Verwendung einer Vorrichtung nach einem der Ansprüche 1 bis 6 in einer Wärmepumpe, die mit einem entzündlichen Kältemittel betrieben wird.

8. Verwendung einer Vorrichtung nach einem der Ansprüche 3 bis 6, **dadurch gekennzeichnet, dass** die Vorrichtung direkt hinter dem Kondensatorwärmeübertrager der Wärmepumpe angeschlossen ist.

9. Verwendung einer Vorrichtung nach einem der Ansprüche 3 bis 6, **dadurch gekennzeichnet, dass** die Vorrichtung direkt hinter dem Verdampfer einer Erdreichwärmepumpe angeschlossen ist.
